# EUROPEAN PATENT APPLICATION

(11) **EP 2 104 246 A1**
(43) Date of publication of application: **23.09.2009**
(21) Application number: 07851063.3
(22) Date of filing: 21.12.2007
(51) Int. Cl.: H04B 7/26

(54) **MOBILE STATION DEVICE, BASE STATION DEVICE, AND PROPAGATION STATE COLLECTION METHOD**

(30) Priority: 09.01.2007 JP 2007001863
(71) Applicant: NTT DoCoMo, Inc., Chiyoda-ku Tokyo 100-6150 (JP)
(72) Inventor: IWAMURA, Mikio, Chiyoda-ku Tokyo 100-6150 (JP); NAKAMURA, Takehiro, Chiyoda-ku Tokyo 100-6150 (JP); KATO, Yasuhiro, Chiyoda-ku Tokyo 100-6150 (JP); SHIMAZU, Yoshitsugu, Chiyoda-ku Tokyo 100-6150 (JP); MOTEGI, Masayuki, Chiyoda-ku Tokyo 100-6150 (JP)
(74) Representative: HOFFMANN EITLE
(86) International application number: PCT/JP2007/074711
(87) International publication number: WO 2008/084663

(57) **Abstract**

A disclosed mobile station is used in a system where a newly-installed base station sends a broadcast channel including information indicating a pre-operation state. The mobile station includes a broadcast channel receiving unit configured to receive a broadcast channel; a new base station determining unit configured to determine whether the received broadcast channel includes the information indicating the pre-operation state; and a reporting unit configured to report an identifier of the newly-installed base station (new cell) and/or reception quality of a pilot channel sent from the newly-installed base station if the new base station determining unit determines that the received broadcast channel includes the information indicating the pre-operation state.

## Description

### TECHNICAL FIELD

The present invention generally relates to a Long Term Evolution (LTE) system. More particularly, the present invention relates to a mobile station, a base station, and a propagation condition collecting method.

### BACKGROUND ART

A successor communication system to W-CDMA and HSDPA (collectively called UMTS), i.e., Long Term Evolution (LTE), is currently being discussed by 3GPP that is a standardization group for UMTS. In LTE, orthogonal frequency division multiplexing (OFDM) is to be used as a downlink radio access method and single-carrier frequency division multiple access (SC-FDMA) is to be used as an uplink radio access method (see, for example, 3GPP TR 25.814 (V7.0.0), "Physical Layer Aspects for Evolved UTRA," June 2006).

In UMTS, when a new cell is to be introduced, the location of a base station, antenna parameters, radio parameters, and so on are simulated using, for example, a simulation tool and link budgets (see, for example, W-CDMA Mobile Communication System, pp.197-199, Keiji Tachikawa, Maruzen, 2001). Then, a new base station is installed based on the simulation results. Before its actual operation is started, a test operation of the new base station is performed by transmitting pilot channels. The administrator measures radio signals transmitted from the new base station with a radio signal measuring device and adjusts the radio parameters based on the results. The radio signal measuring device is mounted on a dedicated vehicle which is driven along roads in a target area to measure the radio signals.

### DISCLOSURE OF INVENTION

### PROBLEMS TO BE SOLVED BY THE INVENTION

Thus, designing and operating a new base station require a huge workload particularly to perform the simulation and the measurement of radio wave propagation conditions and thereby to optimize the antenna and radio parameters. In 3GPP, to reduce the workload, a mechanism for automatically configuring a new base station in a LTE system has been proposed. In the proposed mechanism, a new base station is connected via a cable to a network and is automatically configured when it is turned on (see, for example, 3GPP R2-061929, June 2006). Since it is expected that a large number of small base stations such as home-use base stations will be introduced to meet future communication demands, implementation of such an automatic configuration mechanism is desired.

However, this proposal is still just a concept and specific configurations of a base station and a mobile station have not been proposed yet.

When a new base station is installed, it is necessary to configure radio parameters based on the reception quality, at various locations, of radio signals transmitted from the new base station.

One object of the present invention is to provide a mobile station, a base station, and a propagation condition collecting method that make it possible to collect information on propagation conditions of radio signals transmitted from a new base station.

### MEANS FOR SOLVING THE PROBLEMS

An embodiment of the present invention provides a mobile station in a system where a newly-installed base station sends a broadcast channel including information indicating a pre-operation state. The mobile station includes a broadcast channel receiving unit configured to receive a broadcast channel; a new base station determining unit configured to determine whether the received broadcast channel includes the information indicating the pre-operation state; and a reporting unit configured to report an identifier of the newly-installed base station (new cell) and/or reception quality of a pilot channel sent from the newly-installed base station if the new base station determining unit determines that the received broadcast channel includes the information indicating the pre-operation state.

This configuration makes it possible to automatically collect information on propagation conditions of radio signals transmitted from a newly installed base station and thereby to efficiently introduce a new base station (new cell).

Another embodiment of the present invention provides a base station in a pre-operation state. The base station includes a state setting unit configured to set the base station to the pre-operation state; a broadcast channel generating unit configured to generate a broadcast channel including information indicating the pre-operation state of the base station if the base station is set to the pre-operation state by the state setting unit; and a transmitting unit configured to send the broadcast channel.

This configuration makes it possible to report that a base station is in a pre-operation state where the base station is not in actual operation.

Another embodiment of the present invention provides a method of collecting information on propagation conditions. The method includes a transmission step, performed by a newly-installed base station, of sending a broadcast channel including information indicating a pre-operation state; a broadcast channel receiving step, performed by a mobile station, of receiving a broadcast channel; a new base station determining step, performed by the mobile station, of determining whether the received broadcast channel includes the information indicating the pre-operation state; and a reporting step, performed by the mobile station, of reporting an identifier of the newly-installed base station (new cell) and/or reception quality of a pilot channel sent from the newly-installed base station if it is determined in the new base station determining step that the received broadcast channel includes the information indicating the pre-operation state.

This method makes it possible to automatically collect information on propagation conditions of radio signals transmitted from a newly-installed base station and thereby to efficiently introduce a new cell.

### ADVANTAGEOUS EFFECT OF THE INVENTION

An aspect of the present invention provides a mobile station, a base station, and a propagation condition collecting method that make it possible to collect information on propagation conditions of radio signals transmitted from a new base station.

### BRIEF DESCRIPTION OF THE DRAWINGS

FIG. 1 is a partial block diagram illustrating a base station according to an embodiment of the present invention;
FIG. 2 is a partial block diagram illustrating a mobile station according to an embodiment of the present invention;
FIG. 3 is a flowchart showing a process performed by a base station according to an embodiment of the present invention;
FIG. 4 is a flowchart showing a process performed by a mobile station according to an embodiment of the present invention;
FIG. 5 is a flowchart showing a process performed by a base station according to another embodiment of the present invention; and
FIG. 6 is a flowchart showing a process performed by a mobile station according to another embodiment of the present invention.

### EXPLANATION OF REFERENCES

- 100: Mobile station (user equipment: UE)
- 102: Cell search unit
- 104: Broadcast channel receiving unit
- 106: Control unit
- 108: Reception quality measuring unit
- 110: Reporting unit
- 112: Cell selection unit
- 200: Base station (eNodeB: eNB)
- 202: RF transmission unit
- 204: Broadcast channel generating unit
- 206: State setting unit

### BEST MODE FOR CARRYING OUT THE INVENTION

The best mode for carrying out the invention is described based on the following embodiments with reference to the accompanying drawings.

Throughout the accompanying drawings, the same reference numbers are used for parts having the same functions, and overlapping descriptions of those parts are omitted.

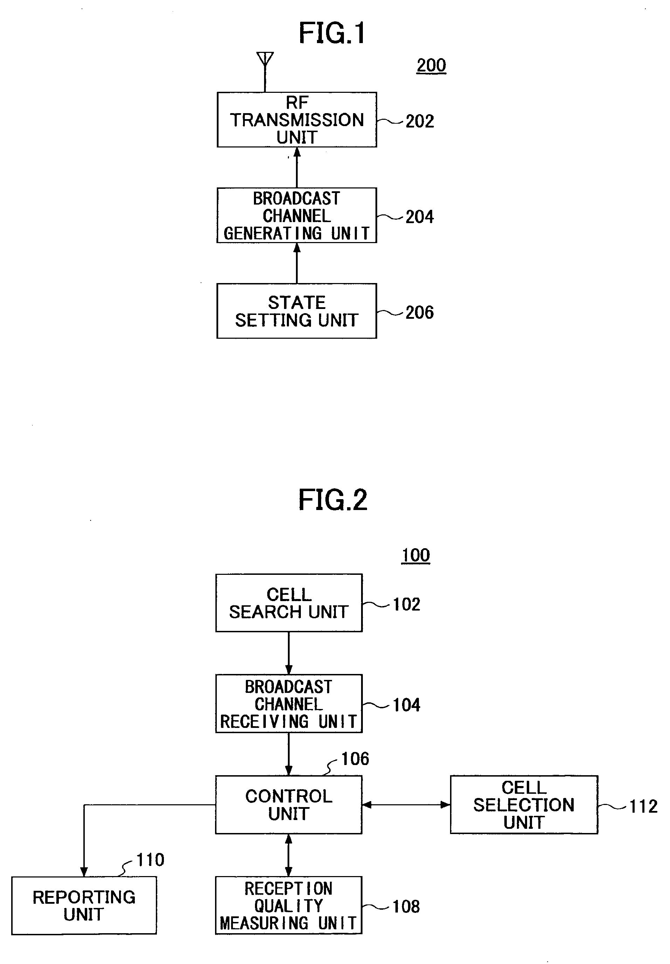

A base station 200 of this embodiment is described below with reference to FIG. 1.

The base station 200 is a newly-installed base station (new base station) and is in a pre-operation state where its actual operation has not been started yet. The base station 200 broadcasts information, e.g., an indicator, indicating that the base station 200 is in the pre-operation state.

The pre-operation state refers to a state where the actual operation of a new base station has not been started yet. The new base station is turned on, for example, after being connected to a network via a cable. Assuming that the new base station is connected to an IP network, processes such as IP address determination, server detection, authentication, association with an upper node, and activation of programs are performed. After those processes, the new base station transmits reference symbols (pilot signal), a synchronization channel, and a minimum set of broadcast information. At this stage, the new base station still cannot provide any communication service for users. This state is called the pre-operation state. Accordingly, when the base station 200 is in the pre-operation state, a mobile station 100 cannot enter the standby mode in the cell of the base station 200 and cannot access the cell.

The base station 200 includes an RF transmission unit 202, a broadcast channel generating unit 204, and a state setting unit 206.

The state setting unit 206 sets the base station 200, for example, to an in-operation state or the pre-operation state. For example, if the base station 200 is a new base station, the state setting unit 206 sets an indicator indicating that the base station 200 is in the pre-operation state and inputs the indicator to the broadcast channel generating unit 204.

The broadcast channel generating unit 204 generates a broadcast channel including the indicator indicating the pre-operation state, which is, for example, represented by one bit, and sends the broadcast channel via the RF transmission unit 202.

Next, the mobile station 100 of this embodiment is described with reference to FIG. 2.

When receiving a broadcast channel from the base station 200, the mobile station 100 determines whether the broadcast channel includes an indicator indicating the pre-operation state. If the broadcast channel includes the indicator indicating the pre-operation state, the mobile station 100 measures the reception quality, such as an SIR, of a pilot channel sent from the new base station 200 and reports the measured reception quality to the network. For example, the mobile station 100 sends the measured reception quality of the pilot channel back to the new base station 200 or to an existing base station (e.g., a base station covering a serving area).

The mobile station 100 includes a cell search unit 102, a broadcast channel receiving unit 104, a control unit 106 that functions as a new base station determining unit, a reception quality measuring unit 108, a reporting unit 110, and a cell selection unit 112.

The cell search unit 102 performs a cell search at predetermined intervals, for example, every 200 ms, to find a cell. If a candidate cell is found, the cell search unit 102 detects a transmission band of broadcast channels and inputs the detected transmission band to the broadcast channel receiving unit 104.

The broadcast channel receiving unit 104 receives a broadcast channel based on the transmission band input from the cell search unit 102 and inputs broadcast information to the control unit 106.

The control unit 106 determines whether an indicator indicating the pre-operation state is in the broadcast information input from the broadcast channel receiving unit 104. If an indicator indicating the pre-operation state is included in the broadcast information, the control unit 106 requests the reception quality measuring unit 108 to measure the reception quality such as an SIR of a pilot channel to be transmitted from the new base station 200 that has sent the broadcast channel. Then, the control unit 106 reports the reception quality of the pilot channel measured by the reception quality measuring unit 108 via the reporting unit 110 to the new base station 200 or an existing base station. The control unit 106 also reports an identifier of the new base station 200 (new cell) to the new base station 200 or the existing base station. The above configuration makes it possible to automatically collect information on propagation conditions of radio signals transmitted from a new base station.

The reporting unit 110 may be configured to report information, such as cell IDs, of other base stations located around the new base station together with the reception quality of the pilot channel transmitted from the new base station. Also, the reporting unit 110 may be configured to report the reception quality, such as SIRs, reception levels, or path losses, of pilot channels sent from the other base stations in addition to the cell IDs.

When the mobile station 100 is in the idle mode or the standby mode, the mobile station 100 accesses the serving base station and thereby reports the information. When the mobile station 100 is in the active mode, i.e., in communication, the mobile station 100 reports the information in the intervals between data transmission and reception processes.

This configuration makes it possible to automatically collect information on propagation conditions of radio signals transmitted from a new base station together with information on other base stations located around the new base station.

If the indicator indicating the pre-operation state is not included in the broadcast information, the control unit 106 requests the reception quality measuring unit 108 to measure the reception quality such as an SIR of a pilot channel to be transmitted from a corresponding existing base station. Then, the control unit 106 inputs the reception quality, measured by the reception quality measuring unit 108, of the pilot channel sent from the existing base station to the cell selection unit 112. The cell selection unit 112 performs cell selection by, for example, comparing the input reception quality with the reception level of the serving cell.

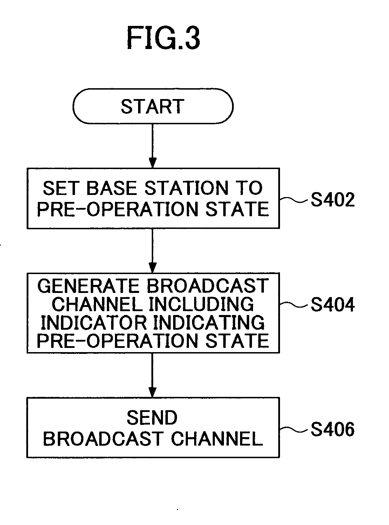

Next, a process performed by the base station 200 of this embodiment is described with reference to FIG. 3.

When the base station 200 is newly installed, the state setting unit 206 sets the base station 200 to the pre-operation state (step S402).

Next, the broadcast channel generating unit 204 generates a broadcast channel including information, e.g., an indicator, indicating that the base station 200 is in the pre-operation state (step S404).

Then, the RF transmission unit 202 sends the broadcast channel (step S406).

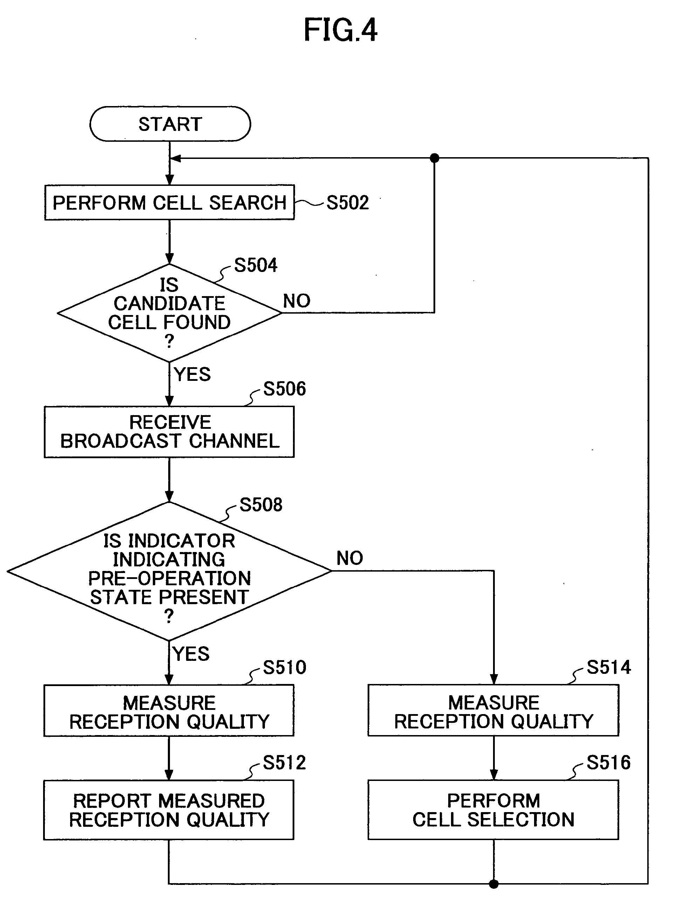

Next, a process performed by the mobile station 100 of this embodiment is described with reference to FIG. 4.

The cell search unit 102 performs a cell search at predetermined intervals, for example, every 200 ms (step S502).

Next, the cell search unit 102 determines whether a candidate cell has been found (step S504).

If no candidate cell has been found (NO in step S504), the process returns to step S502. If a candidate cell has been found (YES in step S504), the broadcast channel receiving unit 104 receives a broadcast channel (step S506). The transmission band of the broadcast channel is obtained, for example, by the cell search unit 102 from a synchronization channel.

Next, the broadcast channel receiving unit 406 determines whether an indicator indicating the pre-operation state is in the received broadcast channel (step S508).

If an indicator indicating the pre-operation state is included in the broadcast channel (YES in step S508), the reception quality measuring unit 108 measures the reception quality of a pilot channel to be transmitted from the new base station that has sent the broadcast channel (step S510).

Then, the reporting unit 110 reports the reception quality measured by the reception quality measuring unit 108 (step S512).

Meanwhile, if no indicator indicating the pre-operation state is included in the broadcast channel (NO in step S508), the reception quality measuring unit 108 measures the reception quality of a pilot channel to be transmitted from a corresponding existing base station (step S514).

In this case, the cell selection unit 112 performs cell selection based on the reception quality measured by the reception quality measuring unit 108 (step S516).

Thus, the above embodiment makes it possible to automatically collect information on propagation conditions of radio signals transmitted from a newly-installed base station and thereby to efficiently introduce a new cell.

The above embodiment also makes it possible to automatically collect information on neighboring cells around a new cell and thereby to efficiently introduce the new cell.

Further, the above embodiment enables a mobile station to determine whether a base station is in the pre-operation state. This in turn makes it possible to prevent a mobile station from selecting a new cell to wait for an incoming call or from accessing the new cell.

Next, a base station according to another embodiment of the present invention is described.

The configuration of the base station of this embodiment is substantially the same as that of the base station described with reference to FIG. 1.

In a base station 200 of this embodiment, an identifier (cell ID) pre-assigned to a new cell in the pre-operation state is used as information for indicating the pre-operation state. In this embodiment, a newly-installed base station sends a broadcast channel including an identifier (cell ID) of a new cell. Alternatively, a newly-installed base station may be configured to send a broadcast channel including a tracking area (TA) ID of a new cell instead of a cell ID of the new cell. In a mobile communication network, the location of a mobile station is registered in the network based on tracking areas. A tracking area corresponds to a location area (LA) or a routing area (RA) in UMTS and is composed of one or more cells.

The cell ID or the TA ID of a new cell is reserved in the system.

Next, a mobile station 100 of this embodiment is described.

The configuration of the mobile station 100 of this embodiment is substantially the same as that of the mobile station described with reference to FIG. 2.

The control unit 106 of the mobile station 100 of this embodiment determines whether a cell ID or a TA ID of a new cell is in broadcast information input from the broadcast channel receiving unit 104. If a cell ID or a TA ID of a new cell is included in the broadcast information input from the broadcast channel receiving unit 104, the control unit 106 requests the reception quality measuring unit 108 to measure the reception quality such as an SIR of a pilot channel to be transmitted from the new base station. Then, the control unit 106 reports the reception quality of the pilot channel measured by the reception quality measuring unit 108 via the reporting unit 110 to the new base station or an existing base station (e.g., a base station covering a serving area).

The reporting unit 110 may be configured to report information, such as cell IDs, of other base stations located around the new base station together with the reception quality of the pilot channel transmitted from the new base station. Also, the reporting unit 110 may be configured to report the reception quality, such as SIRs, reception levels, or path losses, of pilot channels sent from the other base stations in addition to the cell IDs.

This configuration makes it possible to automatically collect information on propagation conditions of radio signals transmitted from a new base station together with information on other base stations located around the new base station.

If neither a cell ID nor a TA ID of a new cell is included in the broadcast information input from the broadcast channel receiving unit 104, the control unit 106 requests the reception quality measuring unit 108 to measure the reception quality such as an SIR of a pilot channel to be transmitted from a corresponding existing base station. Then, the control unit 106 inputs the reception quality, measured by the reception quality measuring unit 108, of the pilot channel sent from the existing base station to the cell selection unit 112.

As described above, the cell selection unit 112 performs cell selection by, for example, comparing the input reception quality with the reception level of the serving cell.

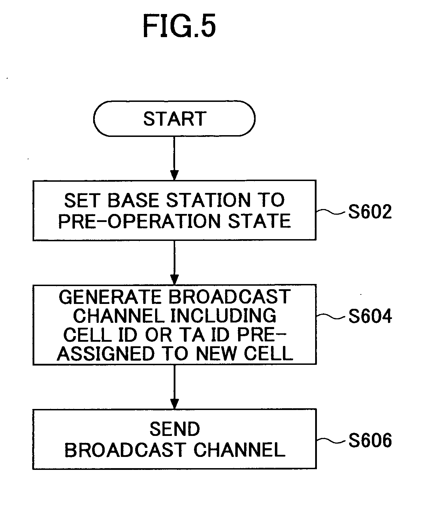

Next, a process performed by the base station 200 of this embodiment is described with reference to FIG. 5.

When the base station 200 is newly installed, the state setting unit 206 sets the base station 200 to the pre-operation state (step S602).

Next, the broadcast channel generating unit 204 generates a broadcast channel including information, such as a cell ID or a TA ID of a new cell, indicating that the base station 200 is in the pre-operation state (step S604).

Then, the RF transmission unit 202 sends the broadcast channel (step S606).

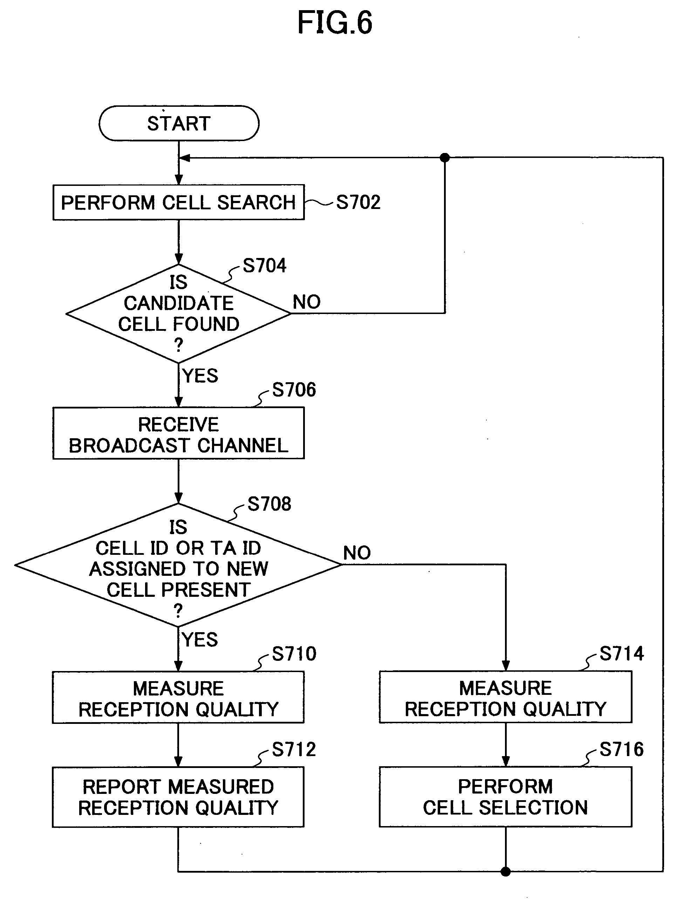

Next, a process performed by the mobile station 100 of this embodiment is described with reference to FIG. 6.

The cell search unit 102 performs a cell search at predetermined intervals, for example, every 200 ms (step S702).

Next, the cell search unit 102 determines whether a candidate cell has been found (step S704).

If no candidate cell has been found (NO in step S704), the process returns to step S702. If a candidate cell has been found (YES in step S704), the broadcast channel receiving unit 104 receives a broadcast channel (step S706). The transmission band of the broadcast channel is obtained, for example, by the cell search unit 102 from a synchronization channel.

Next, the broadcast channel receiving unit 406 determines whether a cell ID or a TA ID of a new cell is in the received broadcast channel (step S708).

If a cell ID or a TA ID of a new cell is included in the broadcast channel (YES in step S708), the reception quality measuring unit 108 measures the reception quality of a pilot channel to be transmitted from the new base station (step S710).

Then, the reporting unit 110 reports the reception quality measured by the reception quality measuring unit 108 (step S712).

Meanwhile, if neither a cell ID nor a TA ID of a new cell is included in the broadcast channel (NO in step S708), the reception quality measuring unit 108 measures the reception quality of a pilot channel to be transmitted from a corresponding existing base station (step S714).

In this case, the cell selection unit 112 performs cell selection based on the reception quality measured by the reception quality measuring unit 108 (step S716).

Thus, this embodiment makes it possible to automatically collect information on propagation conditions of radio signals transmitted from a newly-installed base station and thereby to efficiently introduce a new cell.

Also, this embodiment enables a mobile station to determine whether a base station is in the pre-operation state based on a cell ID or a TA ID of a new cell. This in turn makes it possible to prevent a mobile station from selecting a new cell to wait for an incoming call or from accessing the new cell.

Further, this embodiment makes it possible to report cell IDs and/or the reception quality of pilot channels of existing base stations other than a new base station, and thereby to generate a list of neighboring cells.

The descriptions and drawings in the above embodiments should not be construed to be limiting the present invention. A person skilled in the art may think of variations of the above embodiments from the descriptions.

In other words, the present invention may also include various embodiments not disclosed above. Therefore, the technical scope of the present invention should be determined based on proper understanding of the claims with reference to the above descriptions.

Although the present invention is described above in different embodiments, the distinctions between the embodiments are not essential for the present invention, and the embodiments may be used individually or in combination. Although specific values are used in the above descriptions to facilitate the understanding of the present invention, the values are just examples and different values may also be used unless otherwise mentioned.

The present invention is not limited to the specifically disclosed embodiments, and variations and modifications may be made without departing from the scope of the present invention. Although functional block diagrams are used to describe apparatuses in the above embodiments, the apparatuses may be implemented by hardware, software, or a combination of them.

The present international application claims priority from Japanese Patent Application No. 2007-001863 filed on January 9, 2007, the entire contents of which are hereby incorporated herein by reference.

## Claims

1. A mobile station in a system where a newly-installed base station sends a broadcast channel including information indicating a pre-operation state, the mobile station comprising:
a broadcast channel receiving unit configured to receive a broadcast channel;
a new base station determining unit configured to determine whether the received broadcast channel includes the information indicating the pre-operation state; and
a reporting unit configured to report an identifier of the newly-installed base station (new cell) and/or reception quality of a pilot channel sent from the newly-installed base station if the new base station determining unit determines that the received broadcast channel includes the information indicating the pre-operation state.

2. The mobile station as claimed in claim 1, wherein
the broadcast channel sent from the newly-installed base station includes an indicator indicating the pre-operation state;
the new base station determining unit is configured to determine whether the received broadcast channel includes the indicator indicating the pre-operation state; and
the reporting unit is configured to report the identifier of the newly-installed base station (new cell) and/or the reception quality of the pilot channel sent from the newly-installed base station if the new base station determining unit determines that the received broadcast channel includes the indicator indicating the pre-operation state.

3. The mobile station as claimed in claim 1, wherein
the broadcast channel sent from the newly-installed base station includes the identifier pre-assigned to the newly-installed base station;
the new base station determining unit is configured to determine whether the received broadcast channel includes the identifier; and
the reporting unit is configured to report the identifier of the newly-installed base station (new cell) and/or the reception quality of the pilot channel sent from the newly-installed base station if the new base station determining unit determines that the received broadcast channel includes the identifier.

4. The mobile station as claimed in any one of claims 1 through 3, wherein the reporting unit is configured to also report identifiers of other base stations (cells) than the newly-installed base station and reception quality of pilot channels sent from the other base stations.

5. A base station in a pre-operation state, comprising:
a state setting unit configured to set the base station to the pre-operation state;
a broadcast channel generating unit configured to generate a broadcast channel including information indicating the pre-operation state if the base station is set to the pre-operation state by the state setting unit; and
a transmitting unit configured to send the broadcast channel.

6. The base station as claimed in claim 5, wherein in the pre-operation state, the base station is unable to provide a service but is able to send a synchronization channel and a pilot channel.

7. The base station as claimed in claim 5 or 6, wherein the broadcast channel generating unit is configured to generate the broadcast channel including an indicator indicating the pre-operation state.

8. The base station as claimed in claim 5 or 6, wherein the broadcast channel generating unit is configured to generate the broadcast channel including an identifier pre-assigned to a newly-installed base station.

9. A method of collecting information on propagation conditions, comprising:
a transmission step, performed by a newly-installed base station, of sending a broadcast channel including information indicating a pre-operation state;
a broadcast channel receiving step, performed by a mobile station, of receiving a broadcast channel;
a new base station determining step, performed by the mobile station, of determining whether the received broadcast channel includes the information indicating the pre-operation state; and
a reporting step, performed by the mobile station, of reporting an identifier of the newly-installed base station (new cell) and/or reception quality of a pilot channel sent from the newly-installed base station if it is determined in the new base station determining step that the received broadcast channel includes the information indicating the pre-operation state.
